# EUROPÄISCHE PATENTSCHRIFT

(11) **EP 2 715 161 B1**
(45) Veröffentlichungstag und Bekanntmachung des Hinweises auf die Patenterteilung: **01.04.2015**
(21) Anmeldenummer: 12715946.5
(22) Anmeldetag: 16.04.2012
(51) Int. Cl.: F16C 13/02, F16C 19/55, F16C 23/10, F16C 41/00, B41F 13/28, D21G 1/02

(54) **MEHRRING-EXZENTERWÄLZLAGER**
MULTI-RING ECCENTRIC ROLLING BEARING
PALIER À ROULEMENT POURVU DE PLUSIEURS BAGUES EXCENTRIQUES

(30) Priorität: 23.05.2011 DE 102011076266
(43) Veröffentlichungstag der Anmeldung: 09.04.2014
(73) Patentinhaber: Schaeffler Technologies AG & Co. KG, 91074 Herzogenaurach (DE)
(72) Erfinder: STÜTZLEIN, Markus, 97209 Veitshöchheim (DE); NITTKE, Joachim, 97421 Schweinfurt (DE); ROMAN, Werner, 97078 Würzburg (DE)
(86) Internationale Anmeldenummer: PCT/EP2012/056884
(87) Internationale Veröffentlichungsnummer: WO 2012/159823

(56) Entgegenhaltungen:
- DE-A1- 10 327 218
- DE-A1-102005 044 956
- DE-A1-102007 009 453
- DE-A1-102008 044 257

## Beschreibung

Die Erfindung betrifft eine Wälzlagereinheit, umfassend zwei im wesentlichen in einer Radialebene ineinander angeordnete Wälzlager und ein zwischen dem äußeren Wälzlager und dem inneren Wälzlager angeordnetes Exzenterringpaar, wobei der äußere Exzenterring und der innere Exzenterringe des Exzenterringpaares jeweils mit einem eigenen Verdrehantrieb verbunden sind.

### Hintergrund der Erfindung

Ein typischer Anwendungsbereich für derartige Wälzlagereinheiten liegt beispielsweise bei so genannten Breitstreckwalzen für Papiermaschinen oder dergleichen. Bei derartigen Breitstreckwalzen wird ein innerer Walzenkern und ein äußerer Walzenmantel koaxial ineinander angeordnet, wobei der Walzenmantel jeweils in den äußeren Wälzlagern der an den Walzenenden angeordneten Wälzlagereinheiten und der Walzenkern in den inneren Wälzlagern der Wälzlagereinheiten drehbar gelagert sind. Der Walzenmantel ist die eigentliche Arbeitswalze, auf der die Papierbahn abrollt, während der Walzenkern zur Abstützung des Walzenmantels dient, wie beispielsweise in der DE 10 2006 040 777 A1 im einzelnen dargestellt und beschrieben ist. Über das Exzenterringpaar kann die Lagerachse des inneren Wälzlagers gegenüber der Lagerachse des äußeren Wälzlagers einerseits radial verstellt werden, wodurch die Durchbiegung des Walzenmantels beeinflusst werden kann. Die radiale Verstellung der Lagerachse des inneren Wälzlagers erfolgt beispielsweise durch eine Verdrehung des inneren Exzenterrings. Durch eine Verdrehung beider Exzenterringe gleichzeitig in gleicher Richtung auf beiden Seiten der Walze kann andererseits die Lage der Durchbiegungslinie im Raum verändert werden, wie in der oben genannten Druckschrift im einzelnen beschrieben ist.

Aus der DE 1 292 956 ist es bei einer vergleichbaren Wälzlagereinheit bekannt, die beiden Exzenterringe über an diesen angeordnete Hebel beispielsweise manuell oder durch nicht im einzelnen dargestellte Stellantriebe zu verstellen. Eine derartige Verstelleinrichtung ist jedoch wegen der großen Anzahl benötigter, außerhalb der Wälzlagereinheit angeordneter Bauteile konstruktiv und hinsichtlich des benötigten Bauraumes aufwendig. Insbesondere bei einer manuellen Verstellung erfordern sie zudem den Eingriff von fachkundigem Personal, da andernfalls die Gefahr einer fehlerhaften Einstellung besteht.

Aus der DE 10 2005 044 956 A1 ist eine Breitenstreckwalze bekannt, bei der die beiden Exzenterringe jeweils mit einem Schneckengetriebe verbunden sind, dem eine jeweilige durch einen Antriebsmotor angetriebene Schneckenwelle zugeordnet ist. Eine derartige Anordnung ist ebenfalls baulich äußerst aufwendig und kostenintensiv in der Herstellung.

Ein weiteres Problem bei Anordnungen der beschriebenen Art ist die Fixierung der jeweils eingestellten Verdrehposition der Exzenterringe. Während bei über Schneckengetriebe verstellbaren Exzenterringen die Getriebeauslegung so getroffen werden kann, dass diese selbsthemmend sind und ihre jeweilige Verdrehposition auf diese Weise halten, sind beispielsweise bei manuell verstellbaren Exzenterringe zusätzliche mechanische Arretiervorrichtungen erforderlich, die den Bauaufwand und die Baukosten zusätzlich erhöhen.

Die Verdrehposition der Exzenterringe wird im allgemeinen indirekt beispielsweise über die Anzahl der Umdrehungen eines Schneckengetriebes oder bei manueller Verstellung über zusätzliche gesonderte Messeinrichtungen erfasst, wobei jedoch durch Spiel oder Bauungenauigkeiten im Antriebszug des jeweiligen Verstellantriebes Messungenauigkeiten wahrscheinlich sind.

Ein grundsätzliches Problem bei bekannten Wälzlagereinheiten wird auch darin gesehen, dass die Einrichtungen für die Verstellung, die Lagefixierung und Positionsmessung der Exzenterringe nicht vom Lagerhersteller sondern von anderen Zulieferern bereitgestellt werden, so dass ein weiterer Aufwand aus der notwendigen Abstimmung der unterschiedlichen Zulieferer entsteht.

### Aufgabe der Erfindung

Der Erfindung liegt die Aufgabe zugrunde, eine Wälzlagereinheit der im Oberbegriff des Anspruchs 1 genannten Art bereitzustellen, die eine konstruktive und bauliche Vereinfachung dieser Lagereinheiten hinsichtlich der oben beschriebenen Funktionen, nämlich Verstellung, Fixierung und Positionsmessung der Exzenterringe einzeln oder gemeinsam ermöglicht.

### Zusammenfassung der Erfindung

Der Erfindung liegt die Erkenntnis zugrunde, dass durch eine möglichst direkte Anbindung der beschriebenen Funktionen an die zu verstellenden Exzenterringe die mit diesen bislang verbundenen, oben beschriebenen Nachteile, d.h. insbesondere der konstruktive und bauliche Aufwand und gegebenenfalls die Funktion der Wälzlagereinheit, verbessert werden kann

Die Erfindung geht daher aus von einer Wälzlagereinheit, umfassend zwei im wesentlichen in einer Radialebene ineinander angeordnete Wälzlager und ein zwischen dem äußeren Wälzlager und dem inneren Wälzlager angeordnetes zusammenwirkendes Exzenterringpaar, wobei der äußere Exzenterring und der innere Exzenterring des Exzenterringpaares jeweils mit einem eigenen Verdrehantrieb verbunden sind. Dabei ist erfindungsgemäß vorgesehen, dass der Verdrehantrieb jeweils als ein mit dem zugeordneten Exzenterring baulich integrierter elektrischer Torquemotor ausgebildet ist.

Torquemotoren bzw. Direktantriebsmotoren, die ohne Zwischenglieder wie Getriebe, Riemen, Kupplung usw. direkt auf ein zu verdrehendes Bauteil wirken, erreichen eine hohe Genauigkeit und Dynamik sowie hohe Drehmomente bei relativ kleinen Drehzahlen. Sie sind deshalb für die oben beschriebene Aufgabe, einen Exzenterring zu verdrehen, besonders geeignet. Der Läufer des Torquemotors ist dabei direkt mit dem Exzenterring verbunden, während sich der Stator in der drehfesten Umgebungsstruktur abstützt. Wegen der baulichen Integration in die Wälzlagereinheit ergibt sich eine kompakte Bauform. Torquemotoren sind auch von extern ansteuerbar, so dass sie sich für eine Automatisierung des Einstellvorganges hervorragend eignen.

Der Torquemotor kann grundsätzlich an jeder baulich zugänglichen Außenfläche des Exzenterrings angeordnet sein. Gemäß einer bevorzugten Ausgestaltung der Erfindung ist jedoch vorgesehen, dass der Torquemotor an einer Stirnseite des zugeordneten Exzenterrings angeordnet ist, und zwar vorzugsweise an der von dem zu lagernden Bauteil abgewandten Stirnseite. Dabei ergibt sich eine besonders kompakte Bauweise dann, wenn der Torquemotor eine mit dieser Stirnfläche des zugeordneten Exzenterrings im wesentlichen kongruente Ringform hat, womit eine optimale Ausnutzung des zur Verfügung stehenden Bauraumes erreichbar ist.

Um die Exzenterringe in ihrer jeweiligen Verdrehposition exakt zu fixieren, kann erfindungsgemäß weiter vorgesehen sein, dass den Exzenterringe jeweils eine direkt mit diesen zusammenwirkende Reibungsbremse zugeordnet ist. Auch diese ist demnach mit den Exzenterringen jeweils weitgehend baulich integriert.

Gemäß einer bevorzugten Ausgestaltung der Erfindung umfasst diese Reibungsbremse jeweils ein in einem Bremsengehäuse zwischen einer an dem zugeordneten Exzenterring anliegenden Bremsposition und einer davon abgehobenen Öffnungsposition verstellbares, von einem Federelement in Richtung der Bremsposition belastetes und mittels einer elektrischen Spulen-Anker-Anordnung in seine Öffnungsstellung verstellbares Bremselement. Eine derartige Reibungsbremse kann ebenfalls konstruktiv und baulich einfach sowie kompakt ausgebildet werden.

Das Wälzlager ist demnach auch bezüglich der Fixierfunktion unabhängig davon, ob beispielsweise eine Selbsthemmung über einen Antrieb mittels Schneckengetriebe zur Verfügung steht. Sie ersetzt insbesondere auch bisher bekannte Bremssysteme, die an mit den Exzenterringen antriebsverbundenen Antriebselementen angreifen.

Gemäß einer bevorzugten Ausgestaltung der Erfindung wirkt die Reibungsbremse jeweils mit einer Stirnfläche des zugeordneten Exzenterrings zusammen. Sie kann dann entweder eine mit der Stirnfläche dieses Exzenterrings im wesentlichen kongruente Ringform oder die Form eines mit einem Segment der zugeordneten Stirnfläche kongruenten Ringsegmentes haben, so dass ein verhältnismäßig großer konstruktiver Spielraum für die Gestaltung der Reibungsbremse gegeben ist.

Um die jeweils eingestellte Verdrehposition der Exzenterringe zu bestimmen, kann gemäß der Erfindung weiter vorgesehen sein, dass an den Exzenterringen jeweils eine über einen zumindest seinem vorgegebenen Verdrehwinkel entsprechenden Umfangsbereich sich erstreckende, mit einem zugeordneten Messsensor zusammenwirkende Messskala oder dergleichen angeordnet ist. Diese Anordnung ermöglicht eine direkte Messung des Verdrehwinkels der Exzenterringe, die jeder indirekten Messung, beispielsweise an mit den Exzenterringe antriebsverbundenen Stellantriebselementen oder dergleichen, hinsichtlich der Messgenauigkeit überlegen ist.

Gemäß einer bevorzugten Ausgestaltung der Erfindung ist die Messskala an einer Stirnfläche des zugeordneten Exzenterrings angeordnet, die gut zugänglich ist. Die Messskala ist vorzugsweise aus einer in einer am Exzenterring ausgebildeten Aufnahmenut eingelagerten Magnetpaste (hartmagnetische Ferritpaste) gebildet, die kostengünstig bei hoher Messgenauigkeit herstellbar ist. Der Messsensor überträgt den erfassten Messwert an eine Anzeige bzw. eine Steuerungseinrichtung.

Es sei bemerkt, dass die oben beschriebenen Funktionen jeweils einzeln oder auch gemeinsam bei einer Wälzlagereinheit vorgesehen sein können. Im letzteren Fall ergibt sich eine vollständig autonome, äußerst kompakte Wälzlagereinheit, die vorzugsweise von einem einzigen Hersteller bereitgestellt werden kann, und die sich für einen weitgehend automatisierten Betrieb eignet.

### Kurze Beschreibung der Zeichnungen

Die Erfindung wird nachfolgend anhand der beiliegenden Zeichnung an einigen Ausführungsformen weiter erläutert. Darin zeigt
- Fig. 1: einen Längsschnitt durch eine Wälzlagereinheit mit integriertem Verdrehantrieb,
- Fig. 2: eine Wälzlagereinheit etwa gemäß der Fig. 1, mit integrierter Reibungsbremse,
- Fig. 3: eine Wälzlagereinheit etwa gemäß den Figuren 1 und 2, mit integrierter Messskala, und
- Fig. 4: eine Wälzlagereinheit gemäß Fig. 3 in einer stirnseitigen Ansicht.

### Detaillierte Beschreibung der Zeichnungen

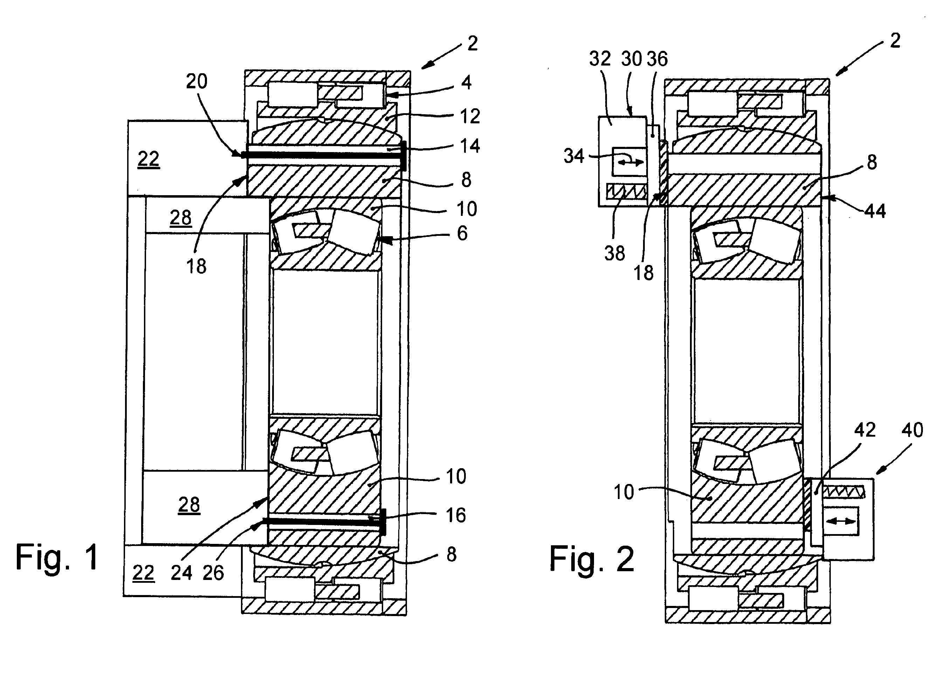

Fig. 1 zeigt eine an sich bekannte Wälzlagereinheit 2 mit einem äußeren Wälzlager 4 und einem inneren Wälzlager 6 sowie einem zwischen dem äußeren und dem inneren Wälzlager 4, 6 angeordneten Exzenterringpaar. Letzteres umfasst einen äußeren Exzenterring 8 und einen damit zusammenwirkenden inneren Exzenterringe 10. Wie Fig. 1 erkennen lässt, bildet der innere Exzenterringe 10 den äußeren Lagerring des inneren Wälzlagers 6. Außerdem ist der innere Lagerring 12 des äußeren Wälzlagers 4 an seinem Innenumfang hohlkugelförmig ausgebildet, so dass er auf dem komplementär geformten Außenumfang des äußeren Exzenterrings 8 eine Kippbewegung ausführen kann. Das innere Wälzlager 6 ist als Pendelrollenlager ausgeführt, so dass es ebenfalls eine Kippbewegung ermöglicht, wie nicht im einzelnen ausgeführt werden muss.

Der äußere Exzenterring 8 und der innere Exzenterring 10 können jeweils mittels Schrauben an einer festen Umgebungsstruktur befestigt werden, die durch zugeordnete Schraubbohrungen 14 bzw. 16 hindurchgreifen.

Wenn der innere Exzenterring 10 gegenüber dem äußeren Exzenterring 8 verdreht wird, dann wird die Lagerachse des inneren Wälzlagers 6 gegenüber derjenigen des äußeren Wälzlagers 4 radial versetzt. Durch eine Verdrehung des Exzenterringpaares über den äußeren Exzenterring 8 kann der radiale Versatz um die Achse des äußeren Wälzlagers 4 verschwenkt werden.

An der in Fig. 1 linken Stirnfläche 18 des äußeren Exzenterrings 8 ist mittels einer durch die Schraubenbohrung 14 hindurchgreifenden Befestigungsschraube 20 ein Direktantriebs- oder Torquemotor 22 angeordnet, der sich an einer drehfesten Umgebungsstruktur abstützt und mittels dessen der äußere Exzenterring 8 verdreht werden kann.

In ähnlicher Weise ist an der Stirnfläche 24 des inneren Exzenterrings 10 über durch die Schraubenbohrung 16 hindurchgreifende Befestigungsschraube 26 ein Direktantriebs- oder Torquemotor 28 angeordnet, mittels dessen der innere Exzenterring 10 verdreht werden kann

Fig. 2 zeigt eine Wälzlagereinheit 2, die der Wälzlagereinheit 2 der Fig. 1 im Aufbau und in der Funktion exakt entspricht, so dass diese nicht nochmals im einzelnen beschrieben werden muss.

Um die jeweilige Verdrehposition des äußeren Exzenterrings 8 exakt zu fixieren, ist dem Exzenterring 8 eine direkt mit diesem zusammenwirkende ringsegmentförmige Reibungsbremse 30 zugeordnet. Diese umfasst ein in geeigneter Weise mit der Umgebungsstruktur der Wälzlagereinheit verbundenes Bremsengehäuse 32 und ein in dem Bremsengehäuse zwischen einer an dem Exzenterring 8 anliegenden Bremsposition und einer davon abgehobenen Öffnungsposition in Richtung des Doppelpfeils 34 verstellbares Bremselement 36. Letzteres (36) ist von einem Federelement 38 in Richtung der Bremsposition mit einer Schließkraft belastet und mittels einer hier nicht im einzelnen dargestellten elektrischen Spulen-Anker-Anordnung in seine Öffnungsstellung verstellbar. Wenn die Reibungsbremse 30 nicht bestromt wird, wird der Exzenterring 8 in seiner Verdrehposition fixiert. Durch Bestromung der Reibungsbremse 30 wird die Bremse gelöst, so dass der Exzenterring beispielsweise durch einen Torquemotor gemäß der Fig. 1 verdreht werden kann.

In ähnlicher Weise ist dem inneren Exzenterring 10 eine Reibungsbremse 40 zugeordnet, deren Bremselement 42 in der oben beschriebenen Weise in eine an dem Exzenterring 10 anliegende Bremsposition oder in eine davon abgehobene Öffnungsposition verstellbar ist.

Es sei hier bemerkt, dass die in Fig. 2 dargestellte Reibungsbremse 30 beispielsweise auch an der in Fig. 2 rechten Stirnfläche 44 des äußeren Exzenterrings 8 angeordnet sein kann, so dass die Stirnfläche 18 für die Anordnung eines Torquemotors entsprechend der Fig. 1 frei ist. Auf diese Weise können sowohl Torquemotoren zum Verdrehen der Exzenterringe als auch Reibungsbremsen zum Fixieren der Exzenterringe in eine Wälzlagereinheit integriert werden.

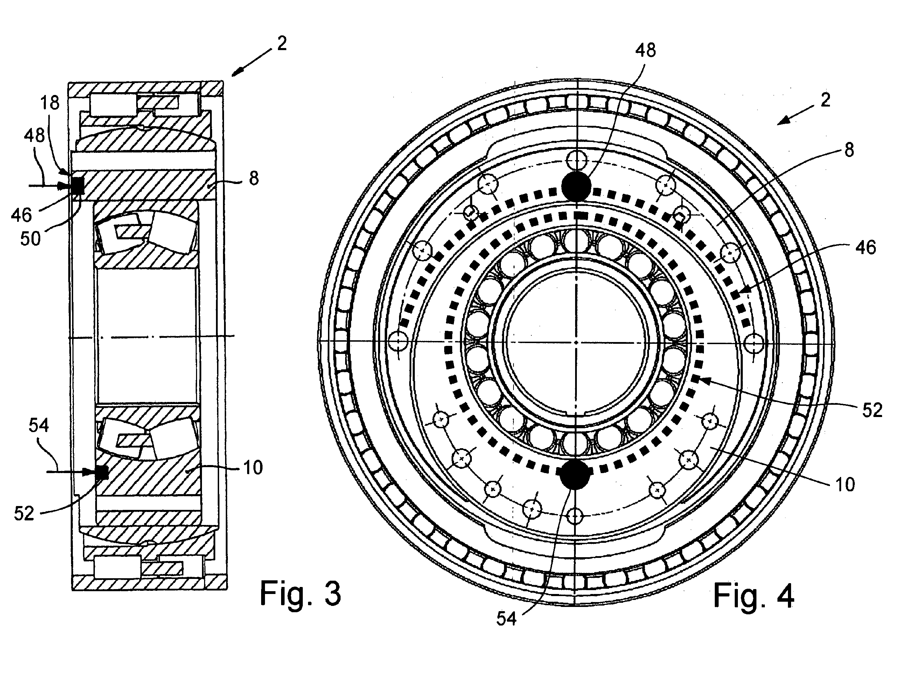

Fig. 3 zeigt wiederum ein Wälzlager 2, welches hinsichtlich seinem Aufbau und seiner Funktion exakt den Wälzlagereinheiten gemäß den Figuren 1 und 2 entspricht.

Um die Position des äußeren Exzenterrings 8 exakt zu messen, ist hier beispielhaft in dessen Stirnfläche 18 eine Messskala 46 angeordnet, die mit einem durch den Pfeil 48 symbolisierten, in der Umgebungsstruktur angeordneten Messsensor zusammenwirkt. Die Messskala 46 besteht im dargestellten Ausführungsbeispiel aus einer in eine in der Stirnfläche 18 ausgebildete Aufnahmenut eingelagerten Magnetpaste 50 (hartmagnetische Ferritpaste). Der Messsensor 48 übermittelt seine Messwerte an eine Anzeigeeinrichtung oder eine Steuerungsvorrichtung. Auf diese Weise ist eine direkte Messung des Verdrehwinkels des Exzenterrings 8 möglich.

In ähnlicher Weise ist am inneren Exzenterring 10 eine identisch aufgebaute Messskala 52 vorgesehen, die mit einem durch einen Pfeil 54 symbolisierten Messsensor zusammenwirkt.

Fig. 4 zeigt die Anordnung gemäß der Fig. 3 in einer Draufsicht. Man erkennt die am äußeren Exzenterring 8 angeordnete, über einen dem möglichen Verdrehwinkel entsprechenden Bereich sich erstreckende Messskala 46 und den zugeordneten Messsensor 48 sowie die am inneren Exzenterring 10 angeordnete, über den gesamten Umfangsbereich sich erstreckende Messskala 52 und den zugeordneten Messsensor 54.

### Bezugszeichenliste

- 2: Wälzlagereinheit
- 4: Wälzlager
- 6: Wälzlager
- 8: Exzenterring
- 10: Exzenterring
- 12: Lagerring
- 14: Schraubbohrung
- 16: Schraubbohrung
- 18: Stirnfläche
- 20: Befestigungsschraube
- 22: Torquemotor
- 24: Stirnfläche
- 26: Befestigungsschraube
- 28: Torquemotor
- 30: Reibungsbremse
- 32: Bremsengehäuse
- 34: Doppelpfeil
- 36: Bremselement
- 38: Federelement
- 40: Reibungsbremse
- 42: Bremselement
- 44: Stirnfläche
- 46: Messskala
- 48: Pfeil
- 50: Magnetpaste
- 52: Messskala
- 54: Pfeil

## Patentansprüche

1. Wälzlagereinheit (2), umfassend zwei im wesentlichen in einer Radialebene ineinander angeordnete Wälzlager (4, 6) und ein zwischen dem äußeren Wälzlager (4) sowie dem inneren Wälzlager (6) angeordnetes Exzenterringpaar, wobei der äußere Exzenterringe (8) und der innere Exzenterringe (10) des Exzenterringpaares jeweils mit einem eigenen Verdrehantrieb verbunden sind, **dadurch gekennzeichnet,** dass der Verdrehantrieb jeweils als mit dem zugeordneten Exzenterring (8, 10) baulich integrierter elektrischer Torquemotor (22,28) ausgebildet ist.

2. Wälzlagereinheit nach Anspruch 1, **dadurch gekennzeichnet,** dass der Torquemotor (22, 28) an einer Stirnseite des zugeordneten Exzenterrings (8, 10) angeordnet ist

3. Wälzlagereinheit nach Anspruch 2, **dadurch gekennzeichnet,** dass der Torquemotor (22, 28) eine mit der Stirnfläche (18, 24) des zugeordneten Exzenterrings (8, 10) im wesentlichen kongruente Ringform hat.

4. Wälzlagereinheit nach einem der Ansprüche 1 bis 3, **dadurch gekennzeichnet,** dass den Exzenterringen (8, 10) jeweils eine direkt mit diesem zusammenwirkende Reibungsbremse (30,40) zugeordnet ist.

5. Wälzlagereinheit nach Anspruch 4, **dadurch gekennzeichnet,** dass die Reibungsbremse (30) jeweils ein in einem Bremsengehäuse (32) zwischen einer an dem zugeordneten Exzenterring (8) anliegenden Bremsposition und einer davon abgehobenen Öffnungsposition verstellbares, von einem Federelement (38) in Richtung zu der Bremsposition belastetes und mittels einer elektrischen Spulen-Anker-Anordnung in seine Öffnungsstellung verstellbares Bremselement (36) umfasst.

6. Wälzlagereinheit nach Anspruch 4 oder 5, **dadurch gekennzeichnet,** dass die Reibungsbremse (30) jeweils mit einer Stirnfläche (18) des zugeordneten Exzenterrings (8) zusammenwirkt.

7. Wälzlagereinheit nach Anspruch 6, **dadurch gekennzeichnet,** dass die Reibungsbremse jeweils eine mit der Stirnfläche (18) des zugeordneten Exzenterrings (8) weitgehend kongruente Ringform hat.

8. Wälzlagereinheit nach Anspruch 6, **dadurch gekennzeichnet,** dass die Reibungsbremse (30) jeweils die Form eines mit einem Segment der zugeordneten Stirnfläche (18) kongruenten Ringsegmentes hat.

9. Wälzlagereinheit nach einem der Ansprüche 1 bis 8, **dadurch gekennzeichnet,** dass an den Exzenterringe (8, 10) jeweils eine über einen zumindest seinem vorgegebenen Verdrehwinkel entsprechenden Umfangsbereich sich erstreckende, mit einem zugeordneten Messsensor (48, 54) zusammenwirkende Messskala (46, 52) angeordnet ist.

10. Wälzlagereinheit nach Anspruch 9, **dadurch gekennzeichnet,** dass die Messskala (46) an einer Stirnfläche (18) des zugeordneten Exzenterrings (8) angeordnet ist.

11. Wälzlagereinheit nach Anspruch 9 oder 10, **dadurch gekennzeichnet,** dass die Messskala (46, 52) aus einer in eine am Exzenterring (8, 10) ausgebildete Aufnahmenut eingelagerten Magnetpaste oder dergleichen gebildet ist.

## Claims

1. Rolling bearing unit (2), comprising two rolling bearings (4, 6), arranged one in another essentially in one radial plane, and a pair of eccentric rings arranged between the outer rolling bearing (4) and the inner rolling bearing (6), the outer eccentric ring (8) and the inner eccentric ring (10) of the pair of eccentric rings being connected in each case to a dedicated rotary drive, **characterized** in that the rotary drive is designed in each case as an electric torque motor (22, 28) integrated structurally with the assigned eccentric ring (8, 10).

2. Rolling bearing unit according to Claim 1, **characterized** in that the torque motor (22, 28) is arranged on one end face of the assigned eccentric ring (8, 10).

3. Rolling bearing unit according to Claim 2, **characterized** in that the torque motor (22, 28) has a ring shape essentially congruent with the end face (18, 24) of the assigned eccentric ring (8, 10).

4. Rolling bearing unit according to one of Claims 1 to 3, **characterized** in that the eccentric rings (8, 10) are assigned in each case a friction brake (30, 40) cooperating directly therewith.

5. Rolling bearing unit according to Claim 4, **characterized** in that the friction brake (30) comprises in each case a braking element (36) which is adjustable in a brake housing (32) between a braking position bearing against the assigned eccentric ring (8) and an opening position lifted off from the latter and which is loaded by a spring element (38) in the direction of the braking position and is adjustable into its opening position by means of an electrical coil/armature arrangement.

6. Rolling bearing unit according to Claim 4 or 5, **characterized** in that the friction brake (30) cooperates in each case with one end face (18) of the assigned eccentric ring (8).

7. Rolling bearing unit according to Claim 6, **characterized** in that the friction brake has in each case a ring shape largely congruent with the end face (18) of the assigned eccentric ring (8).

8. Rolling bearing unit according to Claim 6, **characterized** in that the friction brake (30) has in each case the shape of a ring segment congruent with a segment of the assigned end face (18).

9. Rolling bearing unit according to one of Claims 1 to 8, **characterized** in that the eccentric rings (8, 10) have arranged on them in each case a measuring scale (46, 52) which extends over a circumferential region corresponding at least to the stipulated rotary angle of the said eccentric ring and which cooperates with an assigned measuring sensor (48, 54).

10. Rolling bearing unit according to Claim 9, **characterized** in that the measuring scale (46) is arranged on one end face (18) of the assigned eccentric ring (8).

11. Rolling bearing unit according to Claim 9 or 10, **characterized** in that the measuring scale (46, 52) is formed from a magnetic paste or the like embedded into a reception groove formed on the eccentric ring (8, 10).

## Revendications

1. Unité à paliers à roulement (2), comportant deux paliers à roulement (4, 6) disposés essentiellement l'un dans l'autre dans un plan radial et une paire de bagues excentriques disposées entre le palier à roulement extérieur (4) et le palier à roulement intérieur (6), la bague excentrique extérieure (8) et la bague excentrique intérieure (10) de la paire de bagues excentriques étant reliées respectivement à un entraînement en rotation propre, **caractérisée en ce que** l'entraînement en rotation est réalisé respectivement sous forme de moteur couple électrique (22, 28) intégré structuralement à la bague excentrique associée (8, 10).

2. Unité à paliers à roulement selon la revendication 1, **caractérisée en ce que** le moteur couple (22, 28) est disposé sur un côté frontal de la bague excentrique associée (8, 10).

3. Unité à paliers à roulement selon la revendication 2, **caractérisée en ce que** le moteur couple (22, 28) a une forme annulaire essentiellement en coïncidence avec la face frontale (18, 24) de la bague excentrique associée (8, 10).

4. Unité à paliers à roulement selon l'une quelconque des revendications 1 à 3, **caractérisée en ce qu'**un frein à friction (30, 40) coopérant directement avec les bagues excentriques (8, 10) est respectivement associé à celles-ci.

5. Unité à paliers à roulement selon la revendication 4, **caractérisée en ce que** le frein à friction (30) comporte respectivement un élément de frein (36) déplaçable dans un boîtier de frein (32) entre une position de freinage adjacente à la bague excentrique associée (8) et une position d'ouverture soulevée de celle-ci, sollicité par un élément de ressort (38) en direction de la position de freinage et déplaçable dans sa position d'ouverture au moyen d'un agencement bobine/armature électrique.

6. Unité à paliers à roulement selon la revendication 4 ou 5, **caractérisée en ce que** le frein à friction (30) coopère respectivement avec une face frontale (18) de la bague excentrique associée (8).

7. Unité à paliers à roulement selon la revendication 6, **caractérisée en ce que** le frein à friction a respectivement une forme annulaire en coïncidence dans une large mesure avec la face frontale (18) de la bague excentrique associée (8).

8. Unité à paliers à roulement selon la revendication 6, **caractérisée en ce que** le frein à friction (30) a respectivement la forme d'un segment annulaire en coïncidence avec un segment de la face frontale associée (18).

9. Unité à paliers à roulement selon l'une quelconque des revendications 1 à 8, **caractérisée en ce que**, sur les bagues excentriques (8, 10), est disposée respectivement une échelle de mesure (46, 52) coopérant avec un capteur de mesure associé (48, 54) et s'étendant sur une région périphérique correspondant au moins à son angle de rotation prédéfini.

10. Unité à paliers à roulement selon la revendication 9, **caractérisée en ce que** l'échelle de mesure (46) est disposée sur une face frontale (18) de la bague excentrique associée (8).

11. Unité à paliers à roulement selon la revendication 9 ou 10, **caractérisée en ce que** l'échelle de mesure (46, 52) est formée à partir d'une pâte magnétique ou similaire insérée dans une rainure de réception réalisée sur la bague excentrique (8, 10).
